# EUROPEAN PATENT APPLICATION

(11) **EP 4 838 931 A1**
(43) Date of publication of application: **11.11.2026**
(21) Application number: 25174226.8
(22) Date of filing: 05.05.2025
(51) Int. Cl.: H04W 24/02, H04W 52/02

(54) **RADIO RESOURCE MANAGEMENT RELAXATION**

(71) Applicant: Nokia Technologies Oy, 02610 Espoo (FI)
(72) Inventor: TAYYAB, Muhammad, Oulu (FI); KOSKINEN, Jussi-Pekka, Oulu (FI); KOSKELA, Jarkko Tuomo, Oulu (FI)
(74) Representative: Nokia EPO representatives

(57) **Abstract**

Disclosed is a method comprising maintaining or receiving information on radio resource management relaxation evaluation criteria or offset values, wherein each radio resource management relaxation evaluation criterion or offset value is a network energy saving, NES, aware radio resource management relaxation evaluation criterion or offset value, or a non-NES aware radio resource management relaxation evaluation criterion or offset value.

## Description

### FIELD

The following example embodiments relate to wireless communication.

### BACKGROUND

Radio resource management (RRM) relaxation may be used to reduce user device power consumption.

### SUMMARY

According to some aspects, there is provided the subject matter of the independent claims. Some further aspects are defined in the dependent claims.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates network energy saving;
FIGs 3 to 5 illustrate signal flow diagrams according to an exemplary embodiment;
FIGs 6 to 8 illustrate flow charts according to an exemplary embodiment;
FIG. 9 illustrates an exemplary apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), sixth generation (6G), or seventh generation (7G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

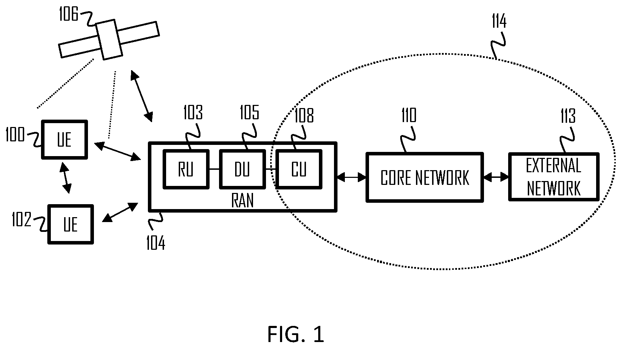

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5th generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle or in a house.

Any feature described herein with a UE may also be implemented with a corresponding apparatus, such as a relay node. An example of such a relay node may be a layer 3 relay (self-backhauling relay) towards the access node. The self-backhauling relay node may also be called an integrated access and backhaul (IAB) node. The IAB node may comprise two logical parts: a mobile termination (MT) part, which takes care of the backhaul link(s) (i.e., link(s) between IAB node and a donor node, also known as a parent node) and a distributed unit (DU) part, which takes care of the access link(s), i.e., child link(s) between the IAB node and UE(s), and/or between the IAB node and other IAB nodes (multi-hop scenario).

Another example of such a relay node may be a layer 1 relay called a repeater. The repeater may amplify a signal received from an access node and forward it to a UE, and/or amplify a signal received from the UE and forward it to the access node.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

5G may enable analytics and knowledge generation to occur at the source of the data. This approach may involve leveraging resources that may not be continuously connected to a network, such as laptops, smartphones, tablets and sensors. Multi-access edge computing (MEC) may provide a distributed computing environment for application and service hosting. It may also have the ability to store and process content in close proximity to cellular subscribers for faster response time. Edge computing may cover a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is envisaged that 7G, which will succeed the 5G and 6G technologies, will be able to satisfy the requirements of extremely high bandwidth, almost zero latency, and universal integration.

Some example embodiments are described below using principles and terminology of 5G radio access technology without limiting the example embodiments to 5G radio access technology, however.

In a 5G radio system, radio resource management (RRM) relaxation may be used to reduce UE power consumption. RRM relaxation may involve less frequent measuring of neighbour cells. An IDLE/INACTIVE mode user device may perform relaxed measurement based on specific criteria. The criteria may include low mobility and/or not being at a cell edge. RRM relaxation criteria may be defined for the UE in connected mode, and/or (e)RedCap UE. The network may configure the relaxation criteria independently, e.g. low-mobility, or not-at-cell-edge, or both. Relaxation measurements with longer intervals may be configured, e.g. using a scaling factor, if any of the criteria is met. In case both criteria are met, the user device may stop measurements for up to 1 hour, for example. In the RRC_Connected state, RRM relaxation may cause a handover failure. Fixed or immobile user devices may be considered to have a higher priority than that of slightly moving user devices for neighbour cell RRM relaxation.

A first indication received by the UE may relate to a network energy saving, NES, mode, and a second indication received by the UE may relate to a correction factor, based on which the UE may evaluate the RRM relaxation criteria. Whenever the network changes the NES state, the UE waits for at least 1 or 2 indications, i.e. the first indication for NES state and/or the second indication for the correction factor. Thus, this may be inefficient from the signalling point of view.

The relaxed measurement criterion for UE with low mobility may be fulfilled when:
- $\left({Srxlev}_{Ref}-Srxlev\right) < {S}_{SearchDeltaP} ,$

Where:
- Srxlev = current Srxlev value of the serving cell (dB).
- Srxlev_{Ref} = reference Srxlev value of the serving cell (dB), set as follows:
   - After selecting or reselecting a new cell, or
   - If (Srxlev - Srxlev_{Ref}) > 0, or
   - If the relaxed measurement criterion has not been met for T_{SearchDeltaP}:
      - The UE shall set the value of Srxlev_{Ref} to the current Srxlev value of the serving cell.

The relaxed measurement criterion for UE not at cell edge may be fulfilled when:
- $Srxlev > {S}_{SearchThresholdP} ,$ and,
- $Squal > {S}_{SearchThresholdQ} ,$ if S_{SearchThresholdQ} is configured,

Where:
- Srxlev = current Srxlev value of the serving cell (dB).
- Squal = current Squal value of the serving cell (dB).

The relaxed measurement criterion for a stationary (e)RedCap UE is fulfilled when:
- $\left({Srxlev}_{RefStationary}-Srxlev\right) < {S}_{SearchDeltaP - Stationary} ,$

Where:
- Srxlev = current Srxlev value of the serving cell (dB).
- Srxlev_{RefStationary} = reference Srxlev value of the serving cell (dB), set as follows:
   - After selecting or reselecting a new cell, or
   - If (Srxlev - Srxlev_{RefStationary}) > 0, or
   - If the relaxed measurement criterion has not been met for T_{SearchDeltaP-Stationary}:
      - The UE shall set the value of Srxlev_{RefStationary} to the current Srxlev value of the serving cell.

The relaxed measurement criterion for a stationary (e)RedCap UE not at cell edge may be fulfilled when:
- the relaxed measurement criterion in clause 5.2.4.9.3 is fulfilled for a period of T_{SearchDeltaP-Stationary}, and,
- $Srxlev > {S}_{SearchThresholdP 2} ,$ and,
- $Squal > {S}_{SearchThresholdQ 2} ,$ if S_{SearchThresholdQ2} is configured.

Where:
- Srxlev = current Srxlev value of the serving cell (dB).
- Squal = current Squal value of the serving cell (dB).

Relaxed measurement criterion for a stationary (e)RedCap UE may be met when:
- $\left(SS-{RSRP}_{RefStationaryConnected}-SS-RSRP\right) < {S}_{SearchDeltaP - StationaryConnected} ,$

Where:
- SS-RSRP = current L3 RSRP measurement of the PCell based on SSB (dB).
- SS-RSRP_{RefStationaryConnected} = reference SS-RSRP value of the PCell (dB), set as follows:
   - at the end of RRC reconfiguration procedure as specified in 5.3.5.3, when *rrm-MeasRelaxationReportingConfig* is included in the *RRCReconfiguration* message; or
   - after MAC successfully completes a Random Access procedure after applying a *reconfigurationWithSync* in *spCellConfig* while stationary criterion is configured; or
   - upon an indication from lower layers that a RACH-less handover or an LTM cell switch is successfully completed for the CG while stationary criterion is configured, or
   - if (SS-RSRP - SS-RSRP_{RefStationaryConnected}) > 0; or
   - if the relaxed measurement criterion has not been met for T_{SearchDeltaP-StationaryConnected}:
      - UE shall set the value of SS-RSRP_{RefStationaryConnected} to the current SS-RSRP value of the serving cell.

SS-RSRP means synchronization signal reference signal received power.

The RRM relaxation may use both stationary and non-cell edge criteria. Due to the dynamic coverage nature of a NES cell, even stationary UE may not (de)activate RRM relaxation as expected. This may result in inefficient relaxation from the UE's perspective. For example, when the gNB turns off half of its antenna elements (e.g. using a massive MIMO muting algorithm), or reduces the transmit power to enable NES mode), the UE may experience sudden drop in the RSRP (reference signal received power), resulting in satisfying the legacy RRM relaxation criteria, even when the UE is stationary and/or not located at the cell edge.

When serving cell relaxation is enabled in beam-based communication, the serving beams used for cell quality assessment may change due to NES activation or deactivation, while the UE is in a relaxed state. This may potentially lead to beam failure or radio link failure.

Prolonged relaxation periods, e.g. up to 1 hour, may negatively impact network performance, particularly for the NES cells. This may result in delayed handovers, radio link failures, and ultimately affect UE throughput, potentially negating the achieved network energy saving.

RRM relaxation may involve the UE relaxing RRM measurements when the network configured condition is met. The network may configure whichever relaxed configuration for the UE. The cell may change "status" from "non-NES" to/from "NES", wherein the network may to send a new RRM relaxation configuration for the UE. At the same time, the network may configure a new RRM/RLM/BFD relaxation condition which considers the "NES state". For 6G, dynamic massive MIMO muting algorithms may make e.g. slot-level decisions to enable/disable a particular NES mode. When the network implements such a dynamic/frequent decision algorithm, sending new relaxation configurations upon each network decision may become costly, e.g. in terms of signalling overheads.

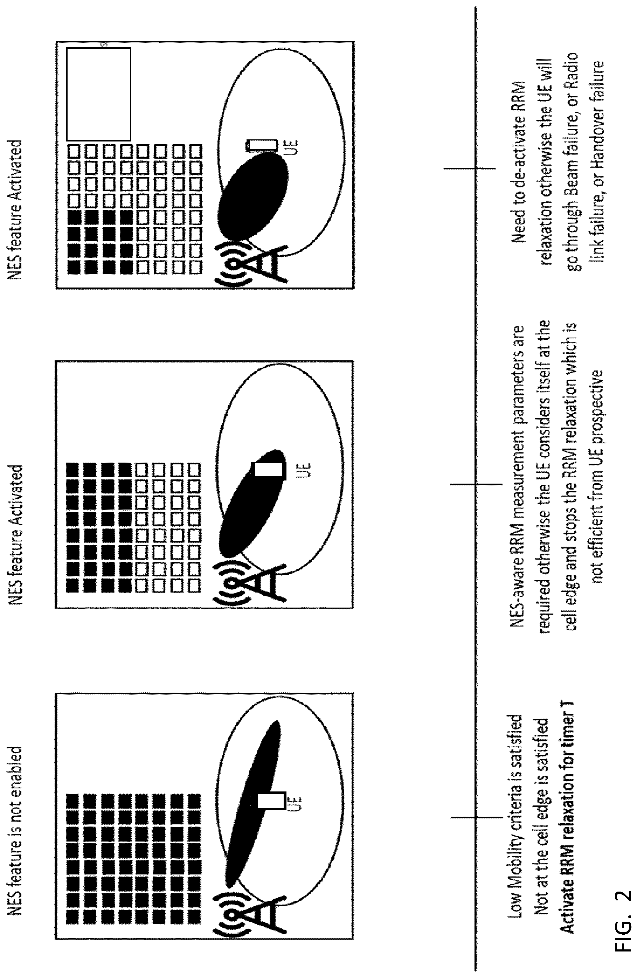

Challenges relating to RRM relaxation and network energy saving cells are further illustrated in FIG. 2. In FIG. 2, black rectangles illustrate active antennas, and white rectangles illustrate inactive antennas.

In an embodiment it may be possible to dynamically adjust the RRM relaxation criteria. The activation and deactivation of the NES mode may be taken into account. Thus, the RRM relaxation may be applied when appropriate, thereby optimizing both network performance and energy efficiency.

In an embodiment, the UE may be configured with multiple RRM relaxation criteria or offset(s). These may include NES-aware RRM/RLM/BFD criteria or offset(s). When the UE receives a legacy synchronization signal block, SSB, the UE may use the legacy RRM criteria. When the UE receives a synchronization signal block, SSB, indicating a NES mode, the UE may switch to NES-aware criteria for the RRM relaxation. The UE may indicate to a network device that the RRM relaxation evaluation may be based on a selected NES mode-specific criteria. In case the network device decides to disable the selected NES state or NES mode, the network device may reject the RRM relaxation decision, and request the UE to do re-evaluation after an expiry of a specific timer.

An embodiment enables to provide NES-aware RRM relaxation. A network device, such as a gNB, may transmit one or more RRM relaxation configurations associated with different NES modes to the user device. The configuration may be a regular (legacy) relaxation configuration, or NES mode specific configuration for each NES mode. In an embodiment one or more offset values to be added to the configuration for different NES modes may be provided by the network device. The network device may transmit a mapping defining a relationship between a SSB transmission pattern and a corresponding NES mode. The SSB transmission pattern may be associated with a SSB periodicity, the SSB transmission frequency and/or time resource. The UE may switch between relaxation configurations or use the offset according to the NES mode of the cell. The UE may determine which relaxation configuration or offset is to be used based on the received SSB, The SSB may explicitly or implicitly indicate the NES mode.

In an embodiment, the UE may determine the NES mode based on the SSB received from the network device. The SSB may indicate the specific RRM relaxation configuration that the UE is to use. For example, the SSB may indicate that a NES mode is activated, and based on this indication the UE may select the appropriate RRM relaxation evaluation criteria that correspond to said NES mode. The SSB may explicitly indicate the RRM relaxation configuration among from one or more RRM relaxation configurations. The SSB may indicate an index related to the specific RRM relaxation configuration corresponding to the NES mode.

In an embodiment, the UE may determine the NES mode based on a transmission pattern of the SSB. Each NES mode may have a NES mode specific SSB transmission pattern. For example, if the SSB is received by the UE with a periodicity of X, this may indicate that the NES mode is not activated, and the UE is to use the regular (legacy) RRM relaxation criteria. If the UE observes a change in SSB periodicity to Y, this may mean that a NES mode is activated, and the UE is to apply the specific RRM relaxation criteria or offset designed for said NES mode.

In an embodiment, the UE may be indicated and/or configured with knowledge of which cells are in a NES mode. For example, if the UE is in CONNECTED state, the UE may be indicated by the network device on the change of the NES mode. The UE may then determine the RRM relax configuration based on the indicated NES mode.

In an embodiment, instead of applying the same configuration towards different cells, the UE may apply a different relaxation configuration or offset towards the different cells based on the NES mode.

In an embodiment, the UE may be configured with multiple RRM relaxation criteria including network energy saving (NES) state aware RRM, RLM and/or BFD criteria, or a single criterion with a NES-specific offset that may be applied to the legacy RRM relaxation criteria. When the UE receives a legacy SSB, it may use the legacy/regular RRM criteria. When the UE receives an SSB indicating NES state, the UE may switch to NES-aware criteria for RRM relaxation.

In an embodiment, in addition to legacy RRM relaxation criteria, the UE may be configured with one or more NES-aware RRM/RLM/BFD relaxation criteria including different threshold(s), offset(s) and/or timer(s) to evaluate RRM relaxation when the cell is in NES mode. The network device may transmit one or more relaxation configuration(s) to the UE. In case one configuration is provided to the UE, then one or more offset values (to be used on top of configured values) for different NES modes may be provided. The network device provides normal (legacy) relaxation configuration and the NES mode specific configurations for each NES mode. The network device may also transmit in the same message a mapping which defines a relationship between a SSB transmission pattern and the corresponding NES mode. The SSB transmission pattern may be associated with SSB periodicity, SSB transmission frequency and/or time resource.

In an embodiment, the RRM relaxation criteria may be applicable to IDLE, INACTIVE and/or CONNECTED state(s). RLM (radio link management) relaxation criteria and/or BFD (beam failure detection) relaxation criteria may be applicable to CONNECTED state. The relaxation configuration may be provided using broadcast (system information) and/or dedicated (e.g. RRC reconfiguration or RRC release message) signaling.

In case the UE receives a legacy SSB, the UE may perform SSB measurement. Then the UE may determine whether RRM, RLM and/or BFD relaxation criteria are met or not, based on legacy/regular relaxation criteria.

In an embodiment, the UE may receive an SSB which may explicitly or implicitly indicate an active/activated NES mode. The SSB may indicate the specific RRM relaxation configuration that UE is to use. For example, the SSB may indicate that the NES mode is activated, and the UE may, based on this indication, select the appropriate RRM relaxation evaluation criteria that correspond to the NES mode. The SSB may also explicitly indicate the RRM relaxation configuration among one or more RRM relaxation configurations. The SSB may indicate an index related to the specific RRM relaxation configuration corresponding to an active/activated NES mode. Each NES mode may also have a specific SSB transmission pattern, wherein the NES mode may be determined or indicated based on the transmission pattern of the SSB. For example, if the SSB arrives with a periodicity of X, this may indicate that a NES mode is not activated, and the UE is to use the regular RRM relaxation criteria. If the UE observes a change in SSB periodicity to Y, this may mean that a NES mode is activated, and the UE is to apply the specific RRM relaxation criteria or offset designed for the NES mode.

In an embodiment, the UE may perform SSB measurement. The UE may switch between relaxation configurations (or use offset) according to the received SSB. The UE may determine which configuration (or offset) is to be used based on the received SSB, as the SSB may explicitly or implicitly indicate the active/activated NES mode.

In an embodiment, the UE may switch to the NES-aware RRM relaxation criteria. The UE may determine that the RRM, RLM and/or BFD relaxation criteria are not met based on the configured NES-aware criteria. The UE may then continue NES-aware RRM/RLM/BFD measurements.

In an embodiment, the UE may receive an SSB which explicitly or implicitly indicates the active/activated NES mode. The UE may then perform SSB measurement. UE may change between relaxation configurations, or use offset, according to the received SSB, i.e. the UE may determine which configuration (or offsets) is to be used based on the received SSB which explicitly or implicitly indicates the NES mode. The may UE switch to NES-aware RRM relaxation criteria.

In an embodiment, the UE may determine whether the NES-aware RRM/RLM/BFD relaxation criteria is met. If yes, the UE may start the NES-aware RRM/RLM/BFD relaxation.

In an embodiment, the UE may optionally report to the network device that the NES-aware RRM/RLM/BFD relaxation criteria is met. This may be performed for the UE in connected mode. The UE may indicate to the network device that the RRM relaxation evaluation is based on particular NES state criteria. In case the network device decides to disable that particular NES state, the network device may reject the RRM relaxation decision and request the UE to perform re-evaluation after expiry of a timer. The network device may allow and/or configure NES-aware RRM/RLM/BFD relaxation. The UE may then start relaxed NES-aware RRM/RLM/BFD measurements.

In an embodiment, the relaxed NES-aware RRM measurement based on the relaxation criteria may comprise one or more of the following. The RRM/RLM/BFD measurements are possibly not performed at all. RRM/RLM/BFD measurements may be resumed when relaxation criteria are not met anymore, or an exit condition is fulfilled. The RRM/RLM/BFD measurements may be relaxed in time and/or frequency wise, until the relaxation criteria are not met anymore, or an exit condition is fulfilled. The RRM/RLM/BFD relaxation may be performed according to the legacy relaxation.

In an embodiment, the SSB may include extra bits indicating the NES mode, e.g. mode 1 (half of the antennas may be muted), mode 2 (quarter of the antennas may be muted), mode 3 (3 dB power reduction may be applied), etc. The NES-specific SSB configuration may thus be provided to the UE. For example, if the impact of mode 1 is an RSRP degradation of 3 dB, the UE may switch to another RRM relaxation criteria or choose an offset of 3 dB in the active relaxation criteria, etc.

In an embodiment, the relaxed measurement criterion configured from the NES-cell for the UE with low mobility may be fulfilled when:
- $\left({Srxlev}_{Ref - NES}-Srxlev\right) < {S}_{SearchDeltaP _ NES ,}$

Where:
- Srxlev = current Srxlev value of the serving cell (dB).
- Srxlev_{Ref-NES} = reference Srxlev value of the serving cell (dB), set as follows:
   - After selecting or reselecting a new cell, or
   - If (Srxlev - Srxlev_{Ref-NES}) > 0, or
   - If the relaxed measurement criterion has not been met for T_{SearchDeltaP_NES}:
      - The UE shall set the value of Srxlev_{Ref-NES} to the current Srxlev value of the serving cell.

For example, the NES-cell may provide one or more values of the SrxlevRef-NES, based on the NES mode. For example, the SrxlevRef-NES may be X dB less than the legacy SrxlevRef, based on the NES mode. Lowering the value of SSearchDeltaP_NES may lead to disabling the RRM relaxation even with short variation in the received power of the SSBs. The highest value of SSearchDeltaP_NES may lead to activating the RRM relaxation. In an embodiment, the network device may provide a set of SSearchDeltaP_NES values based on the NES mode. When the network device activates the NES modes leading to maximum coverage loss, the network device may request the UE to switch to the lowest configured SSearchDeltaP_NES. Thus, the network device may enable the UE(s) to not activate the RRM relaxation, thus reducing the number of HOF, RLF, beam failures etc. If the network device activates a NES mode that has a minimum impact on the coverage, the network device may request the UE to switch to mostly in the RRM relaxation state, e.g. using higher SSearchDeltaP_NES, thus saving the UE energy. In that case, the network device may configure a lower value of TSearchDeltaP_NES.

In an embodiment, the relaxed measurement criterion configured from the NES-cell for the UE not at cell edge may be fulfilled when:
- Srxlev > S_{SearchThresholdP_NES}, and,
- $Squal > {S}_{SearchThresholdQ _ NES} ,$ if S_{SearchThresholdQ_NES} is configured,

Where:
- Srxlev = current Srxlev value of the serving cell (dB).
- Squal = current Squal value of the serving cell (dB).

For example, the NES-cell may provide one or more values of the SSearchThresholdP_NES, or SSearchThresholdQ_NES, based on the NES mode. Lowering the value of SSearchThresholdP_NES may lead to disabling the RRM relaxation even if the UE is in the middle of the cell. The highest value of SSearchThresholdP_NES may lead to activating the RRM relaxation even when the UE is at the cell edge. In embodiment, the network device may provide a set of SSearchThresholdP_NES values based on the NES mode. E.g. when the network device activates the NES modes that lead to maximum coverage loss, the network device may request the UE to switch to the lower configured SSearchThresholdP_NES accounting the coverage loss. I.e. the network device may request the UE to not enable RRM relaxation, but instead prioritize the measurement to reduce radio link failure (RLF), beam failure (BF), and/or handover failure (HOF). If the network device activate a NES mode which has the minimum impact on the coverage, the network device may request the UE to switch to a higher configured SSearchThresholdP_NES, i.e. to mostly stay in the RRM relaxation state, thus saving the UE energy.

If a single RRM relaxation configuration is provided, then one or more offset values may also be provided for the different NES modes. These offset values may be applied on top of the configured values and may be dependent on the specific NES state. For instance, if a NES mode 1 results in a 3 dB RSRP degradation, a 3 dB offset may be applied to the regular (legacy) relaxation criteria. The offset value may be indicated within the SSB, or the UE may determine the offset value based on the SSB periodicity. For example, an SSB periodicity of X may correspond to a 0 dB offset, and an SSB periodicity of Y may correspond to a 3 dB offset, etc.

In an embodiment, the relaxed measurement criterion for the UE with low mobility may be fulfilled when:
- $\left({Srxlev}_{Ref}-Srxlev\right) < {S}_{SearchDeltaP} - offset$

Where:
- Srxlev = current Srxlev value of the serving cell (dB).
- offset = offset to be applied which is dependent on the specific NES state
- Srxlev_{Ref} = reference Srxlev value of the serving cell (dB), set as follows:
   - After selecting or reselecting a new cell, or
   - If (Srxlev - Srxlev_{Ref}) > 0, or
   - If the relaxed measurement criterion has not been met for T_{SearchDeltaP}:
      - The UE shall set the value of Srxlev_{Ref} to the current Srxlev value of the serving cell.

In an embodiment, the relaxed measurement criterion for the UE not at cell edge may be fulfilled when:
- $Srxlev > {S}_{SearchThresholdP} - offset$ and,
- $Squal > {S}_{SearchThresholdQ} - offset$ if S_{SearchThresholdQ} is configured,

Where:
- Srxlev = current Srxlev value of the serving cell (dB).
- Squal = current Squal value of the serving cell (dB).
- offset = offset to be applied which is dependent on the specific NES state.

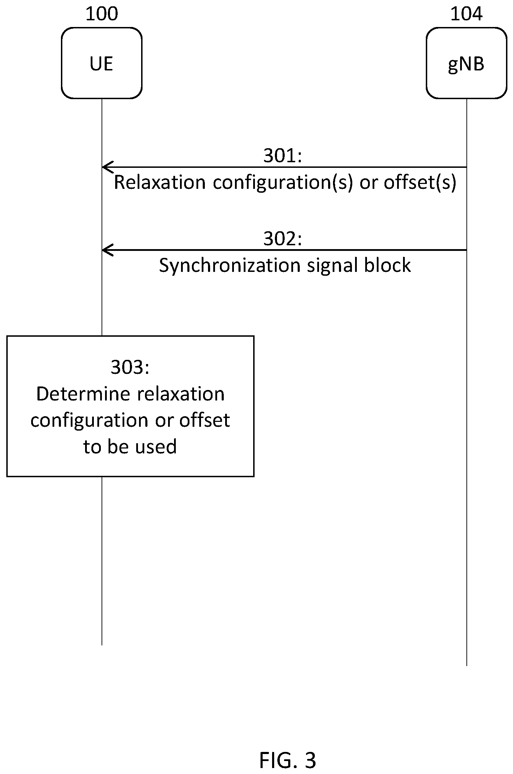

FIG. 3 illustrates a signal flow diagram according to an example embodiment.

Referring to FIG. 3, a network device 104 which may be a RAN node 104, such as a gNB or a base station, may at 301 transmit one or more radio resource management relaxation configurations or offset values to an apparatus 100. The apparatus 100 may be a user device or user equipment UE. The apparatus 100 may receive the transmitted relaxation configurations or offset values. The relaxation configurations or offset values may also be preconfigured to the apparatus 100.

The network device may at 302 transmit, to the apparatus 100, a synchronization signal block, SSB, indicating a radio resource management relaxation configuration or offset value to be used by the apparatus 100. At 303, the apparatus 100 may receive the SSB. At 303, the apparatus 100 may determine a radio resource management relaxation configuration or offset value to be used by the apparatus 100, based on the synchronization signal block, SSB, received from the network device 104.

The radio resource management relaxation configuration may be a network energy saving, NES, mode or non-NES mode specific configuration. The radio resource management relaxation offset value may be a NES mode specific offset value. The radio resource management relaxation configuration or offset value may be a NES-aware radio resource management relaxation configuration or offset value. The radio resource management relaxation configuration or offset value may be a non-NES-aware radio resource management relaxation configuration or offset value. The NES-aware radio resource management relaxation configuration or offset value may be associated with a network energy saving, NES, mode.

In an embodiment, the synchronization signal block may indicate the radio resource management relaxation configuration or offset value to be used by the apparatus 100. The apparatus 100 may select the radio resource management relaxation configuration or offset value indicated by the synchronization signal block.

In an embodiment, the synchronization signal block may indicate an activated or active network energy saving mode. The apparatus 100 may select a NES-aware radio resource management relaxation configuration or offset value corresponding to the activated or active network energy saving mode.

In an embodiment, the synchronization signal block may indicate an index related to the radio resource management relaxation configuration or offset value to be used by the apparatus. The apparatus 100 may select the radio resource management relaxation configuration or offset value based on the index.

The apparatus 100 may at 303 perform synchronization signal block measurement to determine the radio resource management relaxation configuration or offset value to be used by the apparatus 100.

The apparatus 100 may at 303 evaluate radio resource management relaxation criteria corresponding to the radio resource management relaxation configuration or offset value, determine, based on the evaluation, whether radio resource management relaxation is allowed, and start the radio resource management relaxation upon the radio resource management relaxation being allowed.

The apparatus 100 may at 303 evaluate radio resource management relaxation criteria corresponding to the radio resource management relaxation configuration or offset value. Upon radio resource management relaxation criteria being met, the apparatus 100 may transmit an indication (not shown in FIG. 3) to the network device 104. The apparatus 100 may start the radio resource management relaxation, upon receiving, from the network device 104, a response (not shown in FIG. 3) indicating the radio resource management relaxation being allowed by the network device 104.

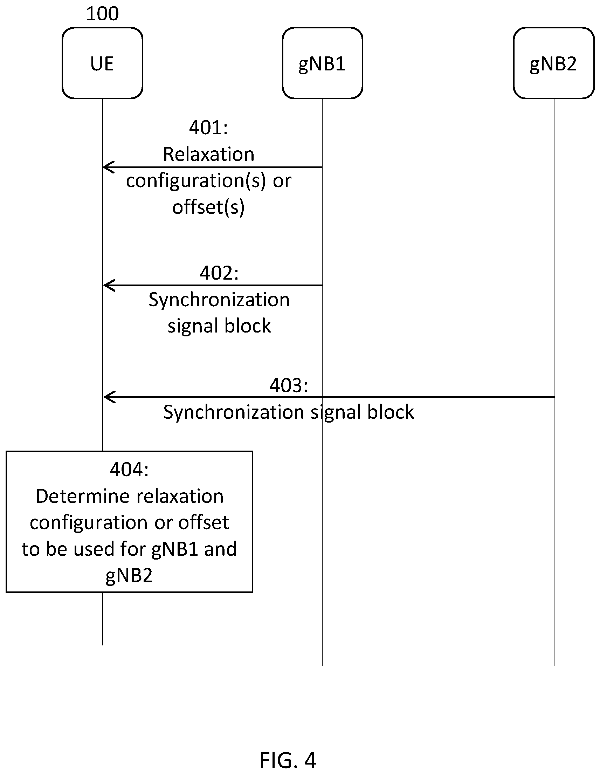

FIG. 4 illustrates a signal flow diagram according to an example embodiment.

Referring to FIG. 4, a first network device gNB1, which may be a gNB or base station, may at 401 transmit one or more radio resource management relaxation configurations or offset values to the apparatus 100. The apparatus 100 may receive the transmitted relaxation configurations or offset values. The relaxation configurations or offset values may also be preconfigured to the apparatus 100.

The first network device may at 402 transmit, to the apparatus 100, a first synchronization signal block, SSB, indicating a radio resource management relaxation configuration or offset value to be used by the apparatus 100 for gNB1. A second network device gNB2, which may be a gNB or base station, may at 403 transmit, to the apparatus 100, a second synchronization signal block, SSB, indicating a radio resource management relaxation configuration or offset value to be used by the apparatus 100 for gNB2. At 303, the apparatus 100 may determine radio resource management relaxation configurations or offset values to be used by the apparatus 100, based on the first and second synchronization signal blocks, SSB, received from the network devices 104. Thus the apparatus may apply different relaxation configurations or offset values for gNB1 and gNB2.

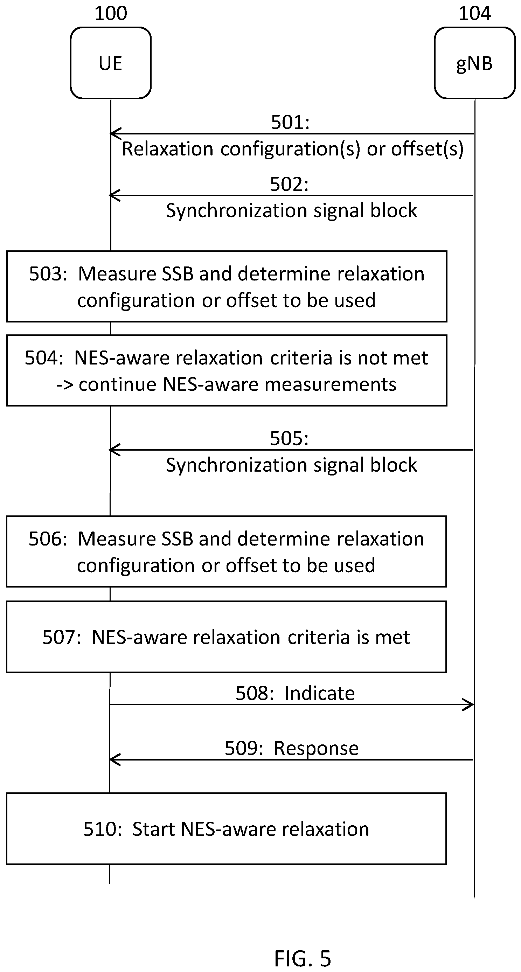

FIG. 5 illustrates a signal flow diagram according to an example embodiment.

In addition to legacy RRM relaxation criteria, the apparatus 100 may be configured with one or more NES-aware RRM/RLM/BFD relaxation criteria. The relaxation criteria may include threshold(s), offset(s) and timer(s) to evaluate RRM relaxation when the cell is in a NES mode. The network device 104 may at 501 provide one or more relaxation configuration(s) or offset value(s) to the apparatus 100.

In case one configuration is provided then one or more offset values (to be used on top of configured values) for different NES modes may be provided. Alternatively, the network device 104 may provide a normal relaxation configuration and NES mode specific configurations for each NES mode. The network device 104 may also provide 501 a mapping which may define the relationship between an SSB transmission pattern and the corresponding NES mode. The SSB transmission pattern may be associated with the SSB periodicity, the SSB transmission frequency and/or time resource.

At 502, the network device 104 may transmit an SSB to the apparatus 100, which explicitly or implicitly indicates an active/activated NES mode. The apparatus may receive the SSB 502, and at 503 perform SSB measurement. Further at 503, the apparatus 100 may select the appropriate RRM relaxation evaluation criteria that correspond to the NES mode. At 504, the apparatus 100 may determine whether RRM/RLM/BFD relaxation criteria are met or not, based on NES-aware relaxation criteria. If the RRM, RLM and/or BFD relaxation criteria are not met, the apparatus may continue NES-aware RRM, RLM and/or BFD measurements.

At 505, the network device 104 may transmit an SSB to the apparatus 100 The may apparatus 100 may receive the SSB at 506. The SSB 505 may indicate a specific RRM relaxation configuration that the apparatus 100 is to use. For example, the SSB may indicate that a NES mode is activated, wherein the apparatus 100, may based on this indication select the appropriate RRM relaxation evaluation criteria that correspond to the NES mode. The SSB may also indicate explicitly the RRM relaxation configuration among the one or more RRM relaxation configurations. The SSB may indicate an index related to the specific RRM relaxation configuration corresponding to the active/activated NES mode. The apparatus 100 may also determine the relaxation configuration or offset to be used based on the transmission pattern of the SSB, as each NES mode may have a specific SSB transmission pattern. For example, if the SSB is received at the apparatus 100 with a periodicity of X, this may indicate that a NES mode is not activated, and the apparatus 100 is to use the regular RRM relaxation criteria. If the apparatus 100 observes a change in SSB periodicity to Y, this may mean that a NES mode is activated, and the apparatus 100 is to apply the RRM relaxation criteria or offset which are specific for said NES mode.

At 506, the apparatus 100 may perform SSB measurement. The apparatus may switch between relaxation configurations (or use an offset) according to the received SSB 505. The apparatus may determine 506 which configuration or offset is to be used based on the received SSB which may explicitly or implicitly indicate the active / activated mode. The apparatus may switch 506 to the NES-aware RRM relaxation criteria. The apparatus may determine 507 whether or not RRM/RLM/BFD relaxation criteria is met, based on the NES-aware criteria.

If it is determined at 507 that the NES-aware RRM/RLM/BFD relaxation criteria is met, the apparatus 100 may at 510, start the NES-aware RRM/RLM/BFD relaxation.

If it is determined at 507 that the NES-aware RRM/RLM/BFD relaxation criteria is met, the apparatus 100 may optionally report or indicate at 508 to the network device 104 that the NES-aware RRM/RLM/BFD relaxation criteria is met. The apparatus may indicate 508 to the network device 104 that the RRM relaxation evaluation is based on particular NES state criteria. In case the network device 104 decides to disable the particular NES state, the network device 104 may reject the RRM relaxation decision and request 509 the apparatus 100 to perform re-evaluation after expiry of a timer. The network device 104 may at 509 transmit a response to the apparatus 100, wherein the network device 104 allows and/or configures the NES-aware RRM/RLM/BFD relaxation, after which the apparatus 100 may at 510, start the NES-aware RRM/RLM/BFD relaxation. Steps 508 and 509 may be performed for the apparatus 100 in a connected mode.

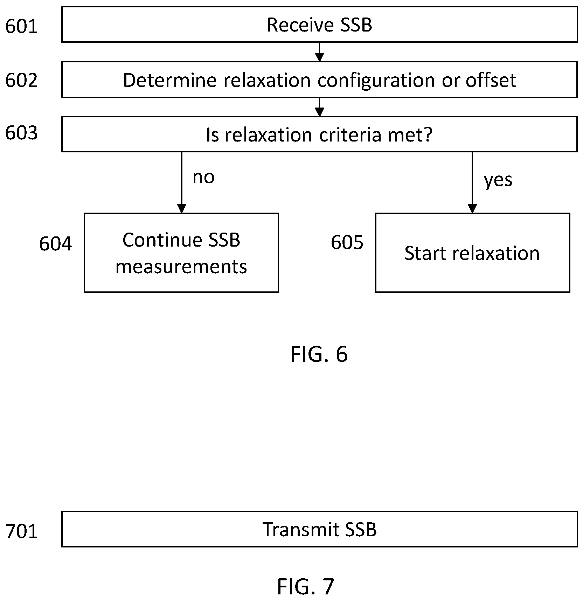

FIG. 6 is a flow chart illustrating an exemplary method. Referring to Figure 6, an apparatus which may be a user device 100, may receive, at 601, a synchronization signal block, SSB, from a network device 104. At 602, the apparatus 100 may determine a radio resource management relaxation configuration or offset value to be used by the apparatus 100, based on the synchronization signal block, SSB, received from the network device 104. The apparatus may at 603 determine whether or not NES-aware relaxation criteria is met. If the NES-aware relaxation criteria are met, the apparatus 100 may, at 605, start NES-aware RRM/RLM/BFD relaxation. If the NES-aware relaxation criteria are not met, the apparatus 100 may, at 604, continue SSB measurements.

FIG. 7 is a flow chart illustrating an exemplary method. Referring to Figure 7, an apparatus 104 which may be a network device, such as a base station or a gNB, may transmit, at 701, to an apparatus 100 which may be a user device, a synchronization signal block, SSB 302, indicating a radio resource management relaxation configuration or offset value to be used by the apparatus 100.

In an embodiment, the apparatus 100 may determine 303, 602 the radio resource management relaxation configuration or offset value to be used by the apparatus 100, based on a transmission pattern of a synchronization signal block, SSB 302, received from the network device 104. The apparatus 100 may, based on the determining, apply 303 the radio resource management relaxation configuration or offset value.

In an embodiment, the radio resource management relaxation configuration or offset value may be associated with a network energy saving, NES, mode. The radio resource management relaxation configuration or offset value may be a non-NES aware radio resource management relaxation configuration or offset value. The transmission pattern of the synchronization signal block 302 may be network energy saving mode specific.

In an embodiment, the apparatus 100 may select 303, 602 the radio resource management relaxation configuration or offset value based on a periodicity indicated by the synchronization signal block 302. The periodicity may indicate a non-activated network energy saving mode.

In an embodiment, the apparatus 100 may select 303, 602 the radio resource management relaxation configuration or offset value based on a periodicity indicated by the synchronization signal block 302. The periodicity may indicate an activated network energy saving mode.

In an embodiment, the network device 104 may transmit 302, 701, to the apparatus 100, a synchronization signal block, SSB 302 having a transmission pattern, the transmission pattern indicating a radio resource management relaxation configuration or offset value to be used by the apparatus 100.

In an embodiment, the apparatus 100 may determine 303, 602 a relaxation configuration or offset value to be used by the apparatus, based on information on a network energy saving. NES. mode of a cell.

In an embodiment, the relaxation configuration or offset value may be related to radio resource management relaxation, radio link management relaxation, or beam failure detection relaxation.

In an embodiment, the offset value may be RSRP offset, RSRQ (reference signal received quality) offset, or RSSI (received signal strength indicator) offset. In an embodiment, the offset value may be an integer or a decimal. In an embodiment, the offset value may be expressed in +/- dB

In an embodiment, the information on the network energy saving mode of the cell may be received 303, 601 by the apparatus 100 from the network device 104.

In an embodiment, the apparatus 100 may receive 303, 601 information on the network energy saving, NES, mode of the cell in a synchronization signal block, SSB, system information (SIBx), and/or dedicated signaling. The dedicated signalling may comprise a RRC release message for IDLE/INACTIVE mode, and/or a RRC reconfiguration for CONNECTED mode.

In an embodiment, the apparatus 100 may receive 303, 601 information on the network energy saving, NES, mode of the cell in an SSB transmission pattern, wherein a periodicity may indicate the NES mode or a non-NES mode.

In an embodiment, the network device 104 may transmit 302, 701 to the apparatus 100, information on a network energy saving, NES, mode of a cell.

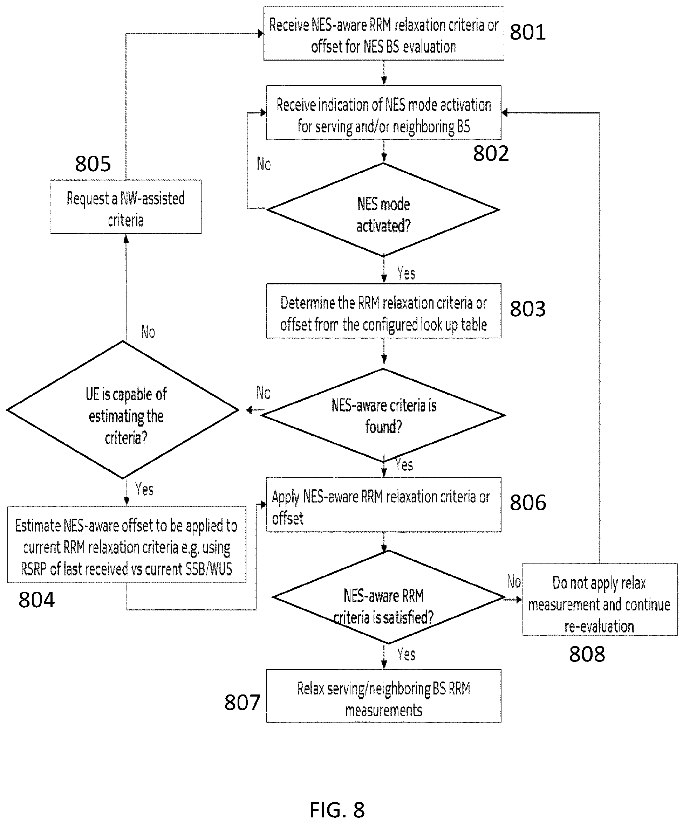

FIG. 8 is a flow chart illustrating an exemplary method. Referring to Figure 8, an apparatus which may be a user device 100, may maintain or receive, at 801, information on radio resource management relaxation evaluation criteria or offset values. Each radio resource management relaxation evaluation criterion or offset value may be a network energy saving, NES, aware radio resource management relaxation evaluation criterion or offset value, or a non-NES aware radio resource management relaxation evaluation criterion or offset value. Each NES-aware radio resource management relaxation evaluation criterion or offset value may be specific for a network energy saving, NES, mode.

In an embodiment, the apparatus 100 may receive, at 802, from a network device 104, an indication on an activation of a NES mode. Based on the indication, the apparatus 100 may determine 803 a radio resource management relaxation evaluation criterion or offset value to be used by the apparatus 100 based on the information, or estimate 804 a radio resource management relaxation evaluation criterion or offset value to be used by the apparatus 100, or transmit 805 to the network device 104, a request message requesting the network device 104 to transmit the radio resource management relaxation evaluation criterion or offset value for the NES mode.

In an embodiment, the apparatus 100 may estimate 804 the radio resource management relaxation evaluation criterion for the NES mode, upon the radio resource management relaxation evaluation criterion or offset value specific to the NES mode not being available in the information.

In an embodiment, the apparatus 100 may transmit 805, to the network device 104, the request message requesting the network device 104 to transmit the radio resource management relaxation evaluation criterion for the NES mode, upon the radio resource management relaxation evaluation criterion or offset value specific to the NES mode not being available in the information and upon the apparatus 100 being incapable of estimating the radio resource management relaxation evaluation criterion or offset value specific to the NES mode.

In an embodiment, the apparatus 100 may evaluate 806 radio resource management relaxation criterion or offset value, and determine, based on the evaluation, whether radio resource management relaxation is allowed. The apparatus 100 may start the radio resource management relaxation 807 upon the radio resource management relaxation being allowed. Upon the apparatus 100 determining that the radio resource management relaxation criteria is not met, the apparatus may decide 808 not to apply relaxation measurements and continue re-evaluation.

In an embodiment, the network device 104 may transmit 302, 701, to a user device, information on the radio resource management relaxation evaluation criteria or offset values. Each radio resource management relaxation evaluation criterion or offset value may be a network energy saving, NES, aware radio resource management relaxation evaluation criterion or offset value, or a non-NES aware radio resource management relaxation evaluation criterion or offset value. Each NES-aware radio resource management relaxation evaluation criterion or offset value may be specific for a network energy saving, NES, mode.

In an embodiment, the apparatus 100 may receive 801 evaluation criteria and look up tables for each NES mode for NES BS RRM relaxation evaluation. When the network device 104 activates the NES mode for serving and/or neighboring base station, the apparatus 100 may determine 803 the NES-aware RRM relaxation criteria from the look up table. E.g. NES mode 1 may be activated, and the apparatus 100 may apply 806 an offset of 3 dB to the active / activated relaxation criteria. The apparatus 100 may apply, at 806, the NES-aware RRM relaxation criteria to identify whether to relax the RRM measurement or not. The apparatus 100 may continue (re)evaluating the NES-aware RRM relaxation criteria. In case the apparatus 100 receives at 802 a new NES mode indication, the apparatus 100 may restart the evaluation procedure. In case the RRM relaxation criteria specific to the active / activated NES-mode is not available in the look up table and the apparatus 100 has the capability to estimate the new evaluation criteria, the apparatus 100 may start estimating 804 the NES-aware offset to be applied, e.g. using measured RSRP or path loss estimation of last received vs. current SSB/WUS (wake up signal). In case the apparatus 100 is not capable of estimating the criteria or offset, the apparatus 100 may request 805 assistance, i.e. request the network device to send relaxation configuration parameters for the new NES mode. The apparatus 100 may save 801 a received relaxation configuration in the look up table for future use.

In an embodiment, the apparatus UE may maintain or receive information on radio resource management relaxation evaluation criteria or offset values. Each radio resource management relaxation evaluation criterion or offset value may be a network energy saving, NES, aware radio resource management relaxation evaluation criterion or offset value, or a non-NES aware radio resource management relaxation evaluation criterion or offset value.

In an embodiment, each NES-aware radio resource management relaxation evaluation criterion or offset value may be specific for a network energy saving, NES, mode.

In an embodiment, the apparatus may receive, from a network device, an indication on an activation of a NES mode. Based on the indication, the apparatus may determine a radio resource management relaxation evaluation criterion or offset value to be used by the apparatus based on the information, and/or estimate a radio resource management relaxation evaluation criterion or offset value to be used by the apparatus, and/or transmit to the network device, a request message requesting the network device to transmit the radio resource management relaxation evaluation criterion or offset value for the NES mode.

In an embodiment, the apparatus may estimate the radio resource management relaxation evaluation criterion for the NES mode, upon the radio resource management relaxation evaluation criterion or offset value specific to the NES mode not being available in the information.

In an embodiment, the apparatus may transmit, to the network device, the request message requesting the network device to transmit the radio resource management relaxation evaluation criterion for the NES mode, upon the radio resource management relaxation evaluation criterion or offset value specific to the NES mode not being available in the information and upon the apparatus being incapable of estimating the radio resource management relaxation evaluation criterion or offset value specific to the NES mode.

In an embodiment, the apparatus may evaluate radio resource management relaxation criterion or offset value, determine, based on the evaluation, whether radio resource management relaxation is allowed, and start the radio resource management relaxation upon the radio resource management relaxation being allowed.

In an embodiment, a network device gNB may transmit, to a user device, information on radio resource management relaxation evaluation criteria or offset values, wherein each radio resource management relaxation evaluation criterion or offset value may be a network energy saving, NES, aware radio resource management relaxation evaluation criterion or offset value, or a non-NES aware radio resource management relaxation evaluation criterion or offset value, wherein each NES-aware radio resource management relaxation evaluation criterion or offset value may be specific for a network energy saving, NES, mode.

In an embodiment, a method may comprise by an apparatus maintaining or receiving information on radio resource management relaxation evaluation criteria or offset values, wherein each radio resource management relaxation evaluation criterion or offset value is a network energy saving, NES, aware radio resource management relaxation evaluation criterion or offset value, or a non-NES aware radio resource management relaxation evaluation criterion or offset value.

In an embodiment, a method may comprise transmitting, by a network device to a user device, information on radio resource management relaxation evaluation criteria or offset values, wherein each radio resource management relaxation evaluation criterion or offset value may be a network energy saving, NES, aware radio resource management relaxation evaluation criterion or offset value, or a non-NES aware radio resource management relaxation evaluation criterion or offset value, wherein each NES-aware radio resource management relaxation evaluation criterion or offset value may be specific for a network energy saving, NES, mode.

In an embodiment, a non-transitory computer readable medium comprising instructions which, when executed by an apparatus, may cause the apparatus to maintain or receive information on radio resource management relaxation evaluation criteria or offset values, wherein each radio resource management relaxation evaluation criterion or offset value may be a network energy saving, NES, aware radio resource management relaxation evaluation criterion or offset value, or a non-NES aware radio resource management relaxation evaluation criterion or offset value.

In an embodiment, a non-transitory computer readable medium comprising instructions which, when executed by a network device, may cause the network device to transmit, to a user device, information on radio resource management relaxation evaluation criteria or offset values, wherein each radio resource management relaxation evaluation criterion or offset value may be a network energy saving, NES, aware radio resource management relaxation evaluation criterion or offset value, or a non-NES aware radio resource management relaxation evaluation criterion or offset value, wherein each NES-aware radio resource management relaxation evaluation criterion or offset value may be specific for a network energy saving, NES, mode.

In an embodiment, there is provided a system comprising at least one processor and at least one memory storing instructions that, when executed by the at least one processor, cause the system to perform any the method steps.

The blocks, related functions, and information exchanges (messages) described above by means of FIGS. 2 to 8 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the terms "the at least one" and "the one or more" mean "any one of the at least one" and "any one of the one or more", respectively.

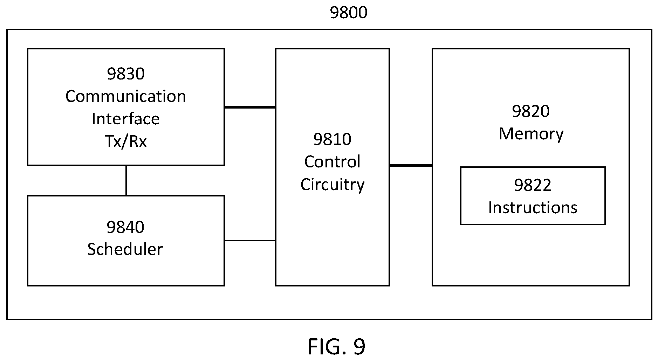

Figure 9 illustrates an example of an apparatus 9800 comprising means for causing the apparatus 9800 to perform one or more of the example embodiments described above. For example, the apparatus 9800 may be an apparatus such as, or comprising, or comprised in, user device 100, terminal device, or user equipment. For example, the apparatus 9800 may be an apparatus such as, or comprising, or comprised in a network device 104 of a radio access network, such as a network node, access node, gNB, or base station.

The apparatus 9800 may comprise, for example, a circuitry or a chipset applicable for realizing one or more of the example embodiments described above. The apparatus 9800 may be an electronic device comprising one or more electronic circuitries. The apparatus 9800 may comprise a communication control circuitry 9810 such as at least one processor, and at least one memory 9820 storing instructions 9822 which, when executed by the at least one processor, cause the apparatus 9800 to carry out one or more of the example embodiments described above. Such instructions 9822 may, for example, include computer program code (software). The at least one processor and the at least one memory storing the instructions may provide the means for providing or causing the performance of any of the methods and/or blocks described above.

The processor is coupled to the memory 9820. The processor is configured to read and write data to and from the memory 9820. The memory 9820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9820 or, alternatively or additionally, they may be received, by the apparatus, via an electromagnetic carrier signal and/or may be copied from a physical entity such as a computer program product. Execution of the computer readable instructions causes the apparatus 9800 to perform one or more of the functionalities described above.

The memory 9820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 9800 may further comprise or be connected to a communication interface 9830, such as a radio unit, comprising hardware and/or software for realizing communication connectivity with one or more wireless communication devices according to one or more communication protocols. The communication interface 9830 comprises at least one transmitter (Tx) and at least one receiver (Rx) that may be integrated to the apparatus 9800 or that the apparatus 9800 may be connected to. The communication interface 9830 may provide means for performing some of the blocks and/or functions (e.g., transmitting and receiving) for one or more example embodiments described above. The communication interface 9830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9830 provides the apparatus with radio communication capabilities to communicate in the wireless communication network. The communication interface may, for example, provide a radio interface to one or more UEs 100, 102 or network device(s) 104. The apparatus 9800 may further comprise or be connected to another interface towards a core network 110, such as the network coordinator apparatus or AMF, and/or to other access nodes of the wireless communication network.

The apparatus 9800 may further comprise a scheduler 9840 that is configured to allocate radio resources. The scheduler 9840 may be configured along with the communication control circuitry 9810 or it may be separately configured.

It is to be noted that the apparatus 9800 may further comprise various components not illustrated in FIG. 9. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
maintain or receive information on radio resource management relaxation evaluation criteria or offset values,
wherein each radio resource management relaxation evaluation criterion or offset value is
a network energy saving, NES, aware radio resource management relaxation evaluation criterion or offset value, or a non-NES aware radio resource management relaxation evaluation criterion or offset value.

2. The apparatus according to claim 1, wherein each NES-aware radio resource management relaxation evaluation criterion or offset value is specific for a network energy saving, NES, mode.

3. The apparatus according to claim 1 or 2, being caused to:
receive, from a network device, an indication on an activation of a NES mode;
wherein, based on the indication, the apparatus is caused to:
determine a radio resource management relaxation evaluation criterion or offset value to be used by the apparatus based on the information, or
estimate a radio resource management relaxation evaluation criterion or offset value to be used by the apparatus, or
transmit to the network device, a request message requesting the network device to transmit the radio resource management relaxation evaluation criterion or offset value for the NES mode.

4. The apparatus according to claim 3, being caused to:
estimate the radio resource management relaxation evaluation criterion for the NES mode,
upon the radio resource management relaxation evaluation criterion or offset value specific to the NES mode not being available in the information.

5. The apparatus according to claim 3, being caused to:
transmit, to the network device, the request message requesting the network device to transmit the radio resource management relaxation evaluation criterion for the NES mode,
upon the radio resource management relaxation evaluation criterion or offset value specific to the NES mode not being available in the information and upon the apparatus being incapable of estimating the radio resource management relaxation evaluation criterion or offset value specific to the NES mode.

6. The apparatus according to any preceding claim, being caused to:
evaluate radio resource management relaxation criterion or offset value;
determine, based on the evaluation, whether radio resource management relaxation is allowed;
start the radio resource management relaxation upon the radio resource management relaxation being allowed.

7. A network device comprising at least one processor, and at least one memory storing instructions that, when executed by the at least one processor, cause the network device at least to:
transmit, to a user device, information on radio resource management relaxation evaluation criteria or offset values,
wherein each radio resource management relaxation evaluation criterion or offset value is a network energy saving, NES, aware radio resource management relaxation evaluation criterion or offset value, or a non-NES aware radio resource management relaxation evaluation criterion or offset value,
wherein each NES-aware radio resource management relaxation evaluation criterion or offset value is specific for a network energy saving, NES, mode.

8. A method comprising: performing by an apparatus
maintaining or receiving information on radio resource management relaxation evaluation criteria or offset values,
wherein each radio resource management relaxation evaluation criterion or offset value is
a network energy saving, NES, aware radio resource management relaxation evaluation criterion or offset value, or
a non-NES aware radio resource management relaxation evaluation criterion or offset value.

9. A method comprising:
transmitting, by a network device to a user device, information on radio resource management relaxation evaluation criteria or offset values,
wherein each radio resource management relaxation evaluation criterion or offset value is a network energy saving, NES, aware radio resource management relaxation evaluation criterion or offset value, or a non-NES aware radio resource management relaxation evaluation criterion or offset value,
wherein each NES-aware radio resource management relaxation evaluation criterion or offset value is specific for a network energy saving, NES, mode.

10. A non-transitory computer readable medium comprising instructions which, when executed by an apparatus, cause the apparatus to perform at least the following:
maintaining or receiving information on radio resource management relaxation evaluation criteria or offset values,
wherein each radio resource management relaxation evaluation criterion or offset value is
a network energy saving, NES, aware radio resource management relaxation evaluation criterion or offset value, or
a non-NES aware radio resource management relaxation evaluation criterion or offset value.

11. A non-transitory computer readable medium comprising instructions which, when executed by a network device, cause the network device to perform at least the following:
transmitting, to a user device, information on radio resource management relaxation evaluation criteria or offset values,
wherein each radio resource management relaxation evaluation criterion or offset value is a network energy saving, NES, aware radio resource management relaxation evaluation criterion or offset value, or a non-NES aware radio resource management relaxation evaluation criterion or offset value,
wherein each NES-aware radio resource management relaxation evaluation criterion or offset value is specific for a network energy saving, NES, mode.
